# EUROPÄISCHE PATENTSCHRIFT

(11) **EP 1 851 845 B1**
(45) Veröffentlichungstag und Bekanntmachung des Hinweises auf die Patenterteilung: **02.03.2011**
(21) Anmeldenummer: 05824353.6
(22) Anmeldetag: 07.12.2005
(51) Int. Cl.: H02K 41/03, H02K 1/06, H02K 15/02

(54) **ELEKTROMOTOR MIT EINEM AUS MEHREREN BLECHPAKETEN GEBILDETEN SEGMENTIERTEN TEIL UND VERFAHREN ZUM ZUSAMMENFÜGEN DER BLECHPAKETE**
ELECTROMOTOR COMPRISING A SEGMENTED PART WHICH IS FORMED FORM SEVERAL SHEET STEEL LAMINATIONS AND METHOD FOR UNIFYING THE SHEET STEEL
MOTEUR ELECTRIQUE COMPRENANT UNE PARTIE SEGMENTEE CONSTITUEE DE PLUSIEURS PAQUETS DE TOLES ET PROCEDE D'ASSEMBLAGE DE CES PAQUETS DE TOLES

(30) Priorität: 14.02.2005 CH 242052005
(43) Veröffentlichungstag der Anmeldung: 07.11.2007
(73) Patentinhaber: ETEL S. A.., 2112 Môtiers (CH)
(72) Erfinder: LACHAT, Claude, CH-2525 Le Landeron (CH); IERVOLINO, Sandro, CH-2022 Bevaix (CH); DACHAUD, Fabien, F-25300 Pontarlier (FR)
(74) Vertreter: Pleyer, Hans Anno
(86) Internationale Anmeldenummer: PCT/EP2005/013076
(87) Internationale Veröffentlichungsnummer: WO 2006/084496

(56) Entgegenhaltungen:
- EP-A- 0 915 553
- DE-A1- 3 400 367
- US-A1- 2003 197 432
- US-A1- 2004 056 537
- PATENT ABSTRACTS OF JAPAN Bd. 2002, Nr. 02, 2. April 2002 (2002-04-02) -& JP 2001 292542 A (NISSAN MOTOR CO LTD), 19. Oktober 2001 (2001-10-19)
- PATENT ABSTRACTS OF JAPAN Bd. 2003, Nr. 10, 8. Oktober 2003 (2003-10-08) -& JP 2003 169430 A (AISIN SEIKI CO LTD), 13. Juni 2003 (2003-06-13)

## Beschreibung

Die vorliegende Erfindung betrifft Linearmotoren mit einem aus mehreren Elementarblechpaketen gebildeten segmentierten Teil. Gemäß dem Stand der Technik weist der segmentierte Teil Zähne auf, die von einem Sockel hervorstehen, wobei diese Zähne untereinander Nuten bilden, in denen die Zähne umschließende Spulen angeordnet sind.

Die Verwendung von Elementarblechpaketen zur Bildung von segmentierten Teilen des Motors weist verschiedene bekannte Vorteile auf. Insbesondere ist es möglich Linearmotoren herzustellen, deren die Spulen tragender Anker unterschiedliche Längen aufweist, jedoch aus den gleichen Elementarblechpaketen hergestellt ist. Die Herstellung von Spulen tragenden Motorteilen aus mehreren Elementarteilen setzt jedoch starre Befestigungsmittel für diese Elementarteile voraus. Insbesondere müssen zur Funktionstüchtigkeit des Motors die Elementarteile an ihren Übergangsstellen zusammengehalten werden, um die Bildung von Luftspalten zwischen diesen Elementarteilen zu vermeiden. Ferner muss für eine gute Planheit der Schnittstellenfläche zum Motor gesorgt werden, um eine gute Abführung der im Motor entstehenden Wärme zu gewährleisten. Im Folgenden wird der Anker nur als bewegliches Teil behandelt, doch bezieht sich die Erfindung selbstverständlich auch auf Motoren mit feststehendem Anker.

Aus der JP 2001-292542 ist ein Synchronmotor bekannt, dessen Spulen tragendes Teil aus einem zu Zähnen und Nuten gebogenes mehrlagiges Blechband besteht. Nach der Montage der Spulen werden hier die Zahnenden abgeschnitten, wodurch ein segmentiertes Teil mit jeweils zwei Teilzähnen entsteht. So eine Anordnung ist nicht besonders stabil.

JP 2001-292 542 offenbart:
Verfahren zur Herstellung eines Elektromotors mit einem Zähne und Nuten aufweisenden segmentierten Teil, der in diesen Nuten angeordnete, die Zähne umschließende Spulen trägt, wobei der segmentierte Teil aus zu mehreren Teilzähne aufweisenden Elementarblechpaketen zusammengefügten Blechen gebildet ist und das Verfahren aus folgenden Schritten besteht:
   - Herstellen der Elementarblechpakete zur Bildung des segmentierten Teils, wobei zwei benachbarte Pakete an ihren jeweils an der Übergangsstelle zwischen zwei Paketen befindlichen Enden einen Teilzahn aufweisen;
   - Anordnen der Elementarblechpakete, so dass zwei benachbarte Pakete an ihrer Übergangsstelle einen aus zwei Teilzähnen bestehenden Übergangszahn bilden;
   - Umschließen jedes Übergangszahns mit einer Übergangsspule.

Die US 2004/0056537 A1 erklärt, dass Spulen eines Motors durch Verbacken mit einem geeigneten Material stabiler werden.

Aus der US 4,665,329 ist ein Linearmotor bekannt, dessen beweglicher, die Spulen tragender Teil aus einem segmentierten Teil besteht. Der segmentierte Teil ist aus mehreren, Elementarteile bildende Elementarblechpaketen gebildet. Dabei ist zum Zusammenfügen einzelner Elementarteile vorgesehen, auf der Längsfläche der Elementarteile auf der den Zähnen gegenüberliegenden Seite in der Nähe der Enden Nuten anzuordnen. Im Bereich jedes Übergangszahns werden in zwei benachbarte Nuten Verbindungsteile eingelassen. Das in der US 4,665,329 beschriebene Zusammenfügen der Elementarteile weist verschiedene Nachteile auf. Erstens erfordert es die Verwendung von spezifischen Befestigungsmittein. Weiterhin werden die beiden einen Übergangszahn bildenden Teilzähne nicht zusammengehalten, da die Befestigung nur auf der den Zähnen gegenüberliegenden Oberseite des segmentierten Teils erfolgt. Insbesondere kann es bei mechanischer Beanspruchung des segmentierten Teils leicht passieren, dass die Zähne auseinanderrücken. Dadurch wird die Stabilität des beweglichen Teils beeinträchtigt und zudem der Reluktanz-Effekt des Motors erhöht. Diese Fügemethode erfordert außerdem sehr enge Maßtoleranzen bei den mechanischen Komponenten und macht sie dadurch teurer.

Aufgabe der vorliegenden Erfindung ist es, diese Nachteile im oben beschriebenen Stand der Technik zu vermeiden.

Ferner ist es Aufgabe der vorliegenden Erfindung, einen Elektromotor anzugeben, der geringe Herstellungskosten mit hoher Leistungsfähigkeit und gutem dynamischen Verhalten verbindet.

Zur Lösung dieser Aufgaben offenbart die Erfindung ein Verfahren zur Herstellung eines Linearmotors gemäß Anspruch 1. Vozugsweise kann der Linear-motor als synchroner Lineamotor ausgebildet sein.

Vorzugsweise sind die aus dem segmentierten Teil des Motors gebildete Einheit und die Spulen mit Harz beschichtet. Mit dem Harz kann die Position der Elementarblechpakete und der Spulen fixiert und die Elementarblechpaket-Verbindung noch weiter versteift werden.

Mit dem erfindungsgemäßen Verfahren ist es möglich, einen segmentierten Teil eines Linearmotors ohne zusätzliche, für das Zusammenfügen von Elementarblechpaketen spezifische Teile und ohne besonders präzise Bearbeitung der Übergangsteile zu erhalten. Das Schneiden im rechten Winkel der Elementarbleche ist verhältnismäßig einfach und präzise durchzuführen.

Mit Hilfe des erfindungsgemäßen Verfahrens können folglich segmentierte, insbesondere bewegliche, Teile von Linearmotorer, gebildet werden, ohne dass hierfür kostspielige Bearbeitungsanlagen notwendig wären. Ferner ist das Zusammenfügen der die segmentierten Teile bildenden Elementarteile relativ leicht durchzuführen.

Die vorliegende Erfindung betrifft weiterhin einen aus dem oben beschriebenen Herstellungsverfahren resultierenden Elektrolinearmotor mit dem Merkmalen von Anspruch 5.

Im Folgenden wird die Erfindung anhand der Zeichnung, die nur als Beispiel dient und in keiner Weise als einschränkend zu verstehen ist, näher erläutert. Es zeigen:
- Fig. 1: (1A, 1B und 1C) eine schematische Darstellung des erfindungsgemäßen Herstellungsverfahrens eines Elektromotors, insbesondere des Zusammenfügens der Elementarblechpakete eines segmentierten mobilen Teils eines Linearmotors;
- Fig. 2: eine schematische Darstellung eines erfindungsgemä- ßen, nach dem anhand von Fig. 1 beschriebenen Ver- fahren hergestellten Motors; und
- Fig. 3: eine Variante des Motors der Fig. 2.

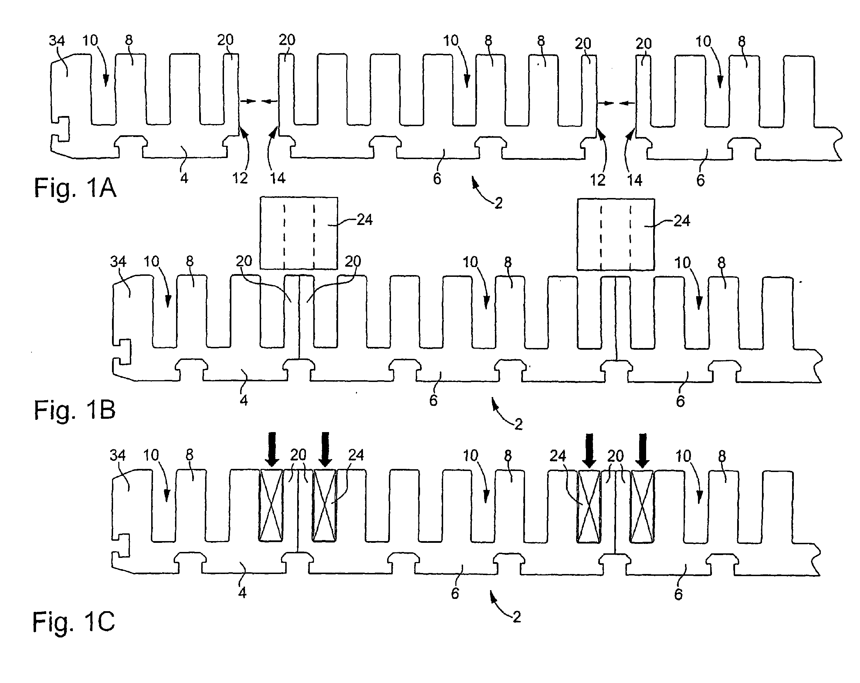

Das Herstellungsverfahren eines erfindungsgemäßen Linearmotors wird anhand von Fig. 1 beschrieben. In Fig. 1 wie auch in den folgenden Figuren ist nur der mobile, die Spulen tragende Teil dargestellt Der Elektromotor umfasst demnach einen aus mehreren Elementarblechpaketen 4 und 6 gebildeten segmentierten Teil 2. Die den segmentierten Teil 2 bildenden Elementarblechpakete bestimmen Zähne 8 und Nuten 10. Zwei benachbart angeordnete Elementarblechpakete weisen an ihren jeweiligen, auf der Seite des Übergangs zwischen diesen beiden Elementarblechpaketen befindlichen Enden 12 und 14 jeweils einen Teilzahn 20 auf. Wie in Fig. 1A dargestellt, sind die Elementarblechpakete 4 und 6 nacheinander angeordnet, sodass zwei benachbarte Pakete bei ihrem Übergang einen in seinen Abmessungen einem Zahn 8 ähnlichen Übergangszahn aufweisen, wobei dieser Übergangszahn wie in Fig. 1B dargestellt aus zwei Teilzähnen 20 besteht. Anschließend werden die Zähne 8 mit Spulen, und insbesondere die Übergangszähne 22 jeweils mit einer Übergangsspule 24 umwickelt. Vorzugsweise sind alle Spulen, einschließlich Übergangsspule, vor der Montage mechanisch identisch.

Die Spulen sind vorzugsweise vorgewickelt und umschließen nach dem Aufstecken jeweils einen einzigen Zahn des segmentierten mobilen Teils. Die Herstellungstoleranzen sind so vorgesehen, dass die Spulen und insbesondere die Übergangsspulen 24 auf einfache Weise in die Nuten 10 eingelassen werden können. Der die Spulenwicklungen bildende elektrische Draht ist vorzugsweise ein emaillierter Kupferdraht mit einer äußeren thermoplastischen Schicht. Die Emailschicht gewährleistet die elektrische Isolation des Drahtes und die Beständigkeit gegen Feuchtigkeit und chemische Mittel. Die äußere thermoplastische Schicht besitzt die Eigenschaft, dass sie unter Wärmeeinwirkung haftend wird und somit das Zusammenbacken der Spulen ermöglicht. Nachdem die Übergangsspulen 24 wie in Fig. 1C dargestellt um die Übergangszähne 22 gewickelt bzw. aufgesteckt wurden, wird mindestens jeder Übergangsspule Wärme zugeführt, damit der Werkstoff der äußeren Schicht haftend wird. Hierfür ist vorzugsweise vorgesehen, die Spule mit einem der Spule zugeführten elektrischen Strom zu erwärmen, der ausreichend ist, um sie zu erwärmen und die Verbäckungstemperatur der äußeren thermoplastischen Schicht zu erreichen. Gleichzeitig und/oder gleich nach der Wärmezufuhr wird ein Druck auf die Übergangsspule in Richtung Boden der beiden beidseitig des mit dieser Übergangsspule umwickelten Übergangszahns angeordneten Nuten ausgeübt. Während dieses Vorgangs werden die Elementarblechpakete aneinander gedrückt und die untere Übergangsfläche völlig plan gehalten. Durch den auf die vorgewärmte Spule ausgeübten Druck bildet sich eine kompakte Masse bestehend aus dem emaillierten Kupfer und der äußeren Verbackungsschicht, die beide Übergangszahnflanken bedeckt.

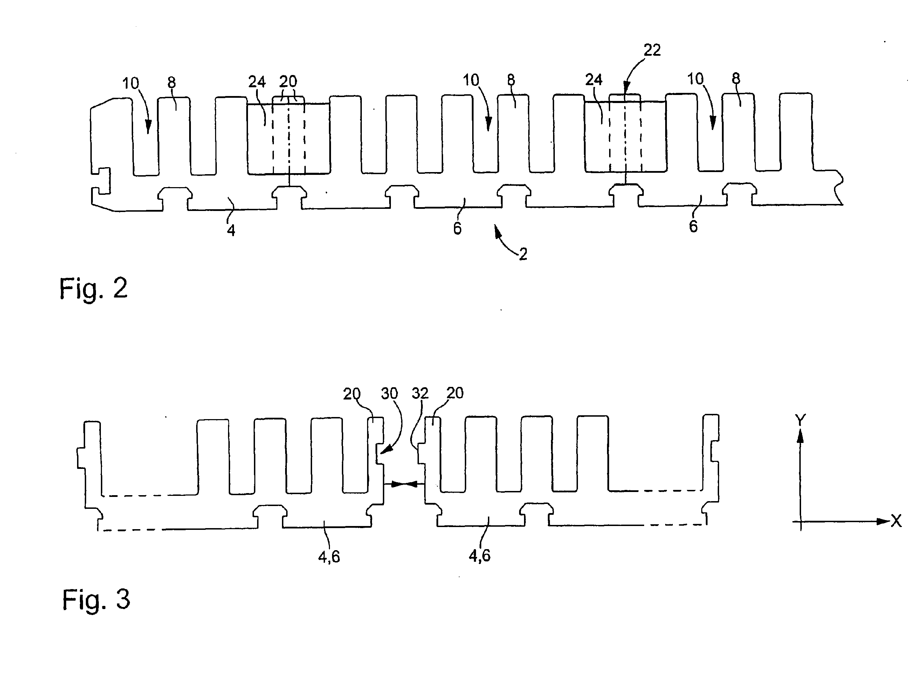

Der Werkstoff der äußeren thermoplastischen Schicht verfestigt sich beim Abkühlen und hält somit die beiden einen Übergangszahn 22 bildenden Teilzähne 20 starr zusammen. Die erhaltene Struktur ist stabil und gegen thermische Beanspruchung, insbesondere aufgrund von Dehnungen und mechanischen Beanspruchungen beständig. Der mobile Teil des nach dem oben beschriebenen Verfahren hergestellten Motors ist ausschnittsweise in Fig. 2 dargestellt.

Mit dem erfindungsgemäßen Verfahren wird eine effiziente Verbackung allein mit den um die Zähne des mobilen Teils gewickelten Spulen erzielt. Dadurch dass die erwärmte Übergangsspule in Richtung Boden der sie aufnehmenden Nuten gepresst wird, kann der Kupferfüllfaktor der Nuten auf über 85 % erhöht und der Wärmewiderstand zur Wärmeabfuhr über den segmentierten mobilen Teil reduziert werden, wodurch die Leistung des Linearmotors erhöht wird.

Zur gleichmäßigen Erhöhung des Nutenfüllfaktors werden die um die Zähne des segmentierten mobilen Teils gewickelten Spulen vorzugsweise warm in die sie aufnehmenden Nuten gepresst. Die Ausgangsabmessungen der Spulen sind so ausgelegt, dass die Höhe der Spulen nach dem Einpressen in die Nuten für den Motor optimal ist.

Versuche haben gezeigt, dass durch das Zusammenfügen von Elementarblechpaketen zur Bildung des segmentierten mobilen Teils nach dem oben beschriebenen erfindungsgemäßen Verfahren eine ausreichende Steifheit erzielt werden kann, wobei diese Steifheit durch eine Harzbeschichtung des segmentierten mobilen Teils und der Spulen, welche die Spulen in ihrer Position hält, noch erhöht werden kann. Das Harz wird so ausgewählt, dass eine gute Wärmeabfuhr während des Betriebs des Elektromotors gewährleistet ist.

Wie in Fig. 2 dargestellt, besteht der mobile Teil des Linearmotors aus einem segmentierten Teil 2, der aus Elementarblechen 4 und 6 gebildet ist, die Zähne 8 und Übergangszähne 22 bildende Teilzähne 20 aufweisen. Insbesondere ist eine Übergangsspule 24 um jeden Übergangszahn 22 gewickelt. Die Übergangsspule wird warm, d.h. nachdem der Werkstoff der äußeren Schicht haftend geworden ist, in Richtung Boden der Nuten 10 gepresst. Dabei können mobile Teile des Linearmotors von unterschiedlicher Länge mit nur zwei verschiedenen Elementarblechpaketen 4 und 6 erzielt werden. Das Paket 4 bestimmt ein Endelement bzw. einen Endteil, während das Paket 6 ein Mittelelement bzw. einen internen, d.h. zwischen zwei Paketen 4 liegenden Teil bestimmt. Vorzugsweise weisen die Mittelelemente jeweils die gleiche Länge auf, und die Endteile haben einen ein spezifisches Profil aufweisenden Endzahn 34. Der segmentierte Teil und die Spulen sind zur Versteifung und zur Abfuhr der von den Spulen während des Motorbetriebs erzeugten Wärme vorzugsweise mit Harz beschichtet.

In Fig. 3 ist ausschnittsweise eine Ausführungsvariante eines erfindungsgemäßen Elektromotors dargestellt. Diese Variante zeichnet sich dadurch aus, dass die beiden einen Übergangszahn 22 bildenden Teilzähne 20 Positioniermittel 30,32 entsprechend einer zur Längsrichtung X des segmentierten Teils quer verlaufenden Richtung Y aufweisen. Bei dieser Variante werden die Positioniermittel von einer an der äußeren Querfläche eines der beiden Teilzähne vorgesehenen Nute 30 und einem entsprechenden, an der äußeren Querfläche des anderen Teilzahnes vorgesehenen Vorsprung 32 gebildet. Damit wird die Ausrichtung der Elementarblechpakete gewährleistet und die einen Übergangszahn bildenden Außenflächen der Teilzähne können in Querrichtung Y nicht gegeneinander verrutschen.

## Patentansprüche

1. Verfahren zur Herstellung eines Elektrolinearmotors mit einem Zähne (8) und Nuten (10) aufweisenden segmentierten Teil (2), der in diesen Nuten angeordnete, die Zähne umschließende Spulen trägt, wobei der segmentierte Teil aus zu mehreren Zähne (8) und Teilzähne (20) aufweisenden Elementarblechpaketen (4, 6) zusammengefügten Blechen gebildet ist und das Verfahren aus folgenden Schritten besteht:
- Herstellen der Elementarblechpakete (4, 6) zur Bildung des segmentierten Teils (2), wobei zwei benachbarte Pakete jeweils mehrere Zähne (8) und an ihren jeweils an der Übergangsstelle zwischen zwei Paketen befindlichen Enden (12, 14) einen Teilzahn (20) aufweisen;
- Anordnen der Elementarblechpakete, so dass zwei benachbarte Pakete an ihrer Übergangsstelle einen aus zwei Teilzähnen (20) bestehenden Übergangszahn (22) bilden;
- Umschließen der Zähne (8) mit Spulen und umschließen jedes Übergangszahns (22) mit einer Übergangsspule (24);
- Zuführen von Wärme bei jeder Übergangsspule, um eine den Leiterdraht jeder Übergangsspule (24) umgebende äußere thermoplastische Schicht haftend zu machen, und Ausüben eines Druckes auf jede Übergangsspule (24) in Richtung und gegen den Boden der beiden jeden Übergangszahn (22) umschließenden Nuten, sodass die beiden jeweils den Übergangszahn (22) bildenden Teilzähne (20) aneinander gedrückt werden;
- Verfestigen der die äußere Schicht des Leiterdrahtes bildenden thermoplastischen Schicht.

2. Verfahren nach Anspruch 1, **dadurch gekennzeichnet, dass** die Teilzähne an ihren äußeren Querflächen Positioniermittel (30, 32) aufweisen, die so angeordnet sind, dass sie ein relatives Positionieren der beiden einen Übergangszahn (22) bildenden Teilzähne (20) gewährleisten.

3. Verfahren nach Anspruch 1 oder 2, **dadurch gekennzeichnet, dass** die Übergangsspule aus einem von der äußeren thermoplastischen Schicht umschlossenen emaillierten Kupferdraht gebildet ist.

4. Verfahren nach einem der vorhergehenden Ansprüche, **dadurch gekennzeichnet, dass** der segmentierte Teil (2) und die in den Nuten angeordneten Spulen (24) nach den in Anspruch 1 genannten Schritten mit Harz beschichtet werden.

5. Elektrolinearmotor mit einem segmentierten Teil (2), der Zähne (8) und Nuten (10) und in diesen Nuten angeordnete, die Zähne umschließende Spulen aufweist, wobei der segmentierte Teil aus zu mehreren Zähne (8) und Teilzähne (20) aufweisenden Elemetarblechpaketen (4, 6) zusammengefügten Blechen gebildet ist, wobei die Zähne (8) mit Spulen umwickelt sind, **dadurch gekennzeichnet, dass** jedes Elementarblechpaket (4, 6) jeweils mehrere Zähne (8) und an seinen Enden (12, 14) gegenüber eines benachbarten Elementarblechpaketes jeweils einen Teilzahn (20) aufweist, wobei zwei benachbarte Teilzähne (20) am Übergang zwischen zwei benachbarten Elementarblechpaketen einen Übergangszahn (22) bilden, der von einer gegen den Boden der beiderseits des Übergangszahns befindlichen Nuten (10) gepressten Übergangsspule (24) umschlossen ist, welche die beiden Teilzähne (20) aneinander gedrückt hält, und dass jede Übergangsspule (24) um ihren Leiterdraht herum eine äußere thermoplastische, eine kompakte Masse bildende Verbackungsschicht aufweist, sodass jede Übergangsspule (24) mit dem sie tragenden Übergangszahn (22) sowie den besagten beidseits des Übergangszahns (22) befindlichen Nuten (10) verbacken ist.

6. Elektrolinearmotor nach Anspruch 5, **dadurch gekennzeichnet, dass** der segmentierte Teil (2) und die in den Nuten des segmentierten Teils angeordneten Spulen (24) mit einem Versteifungsharz beschichtet sind.

7. Elektrolinearmotor nach einem der Ansprüche 5 oder 6, **dadurch gekennzeichnet, dass** der Kupferfüllfaktor der Übergangsspulen (24) in den die Übergangszähne umschließenden Nuten höher ist als 85 %.

8. Elektrolinearmotor nach einem der Ansprüche 5 bis 7, dessen segmentierter Teil (2) nur aus zwei Typen von Elementarblechpaketen (4, 6) gebildet ist, wobei der erste Typ (6) aus Mittelelementen von gleicher Länge und der zweite Typ (4) von einen Endzahn (34) mit abgeschrägtem Profil aufweisenden Endelementen gebildet ist.

## Claims

1. A method for producing a linear electric motor with a segmented part (2) which has teeth (8) and grooves (10) and bears coils which are arranged in these grooves and surround the teeth, wherein the segmented part is formed from laminations which are joined together to form elementary lamination cores (4, 6) which have a plurality of teeth (8) and part-teeth (20), and the method consists of the following steps:
- producing the elementary lamination cores (4, 6) in order to form the segmented part (2), wherein two adjacent cores in each case have a plurality of teeth (8) and, at their ends (12, 14) which are situated in each case at the transition point between two cores, a part-tooth (20);
- arranging the elementary lamination cores so that two adjacent cores form a transition tooth (22) consisting of two part-teeth (20) at their transition point;
- surrounding the teeth (8) with coils and surrounding each transition tooth (22) with a transition coil (24);
- supplying heat for each transition coil in order to make the outer thermoplastic layer which surrounds the conductor wire of each transition coil (24) adherent, and exerting a pressure on each transition coil (24) in the direction of and against the base of the two grooves which surround each transition tooth (22), so that the two part-teeth (20) which in each case form the transition tooth (22) are pressed against each other;
- solidifying the thermoplastic layer which forms the outer layer of the conductor wire.

2. The method according to Claim 1, **characterised in that** the part-teeth have on their outer transverse faces positioning means (30, 32) which are arranged in such a manner that they ensure relative positioning of the two part-teeth (20) which form a transition tooth (22).

3. The method according to Claim 1 or 2, **characterised in that** the transition coil is formed from an enamelled copper wire which is surrounded by the outer thermoplastic layer.

4. The method according to one of the preceding claims, **characterised in that** the segmented part (2) and the coils (24) arranged in the grooves are coated with resin following the steps given in Claim 1.

5. A linear electric motor with a segmented part (2) which has teeth (8) and grooves (10) and coils which are arranged in these grooves and surround the teeth, wherein the segmented part is formed from laminations which are joined together to form elementary lamination cores (4, 6) which have a plurality of teeth (8) and part-teeth (20), wherein coils are wound around the teeth (8), **characterised in that** each elementary lamination core (4, 6) has in each case a plurality of teeth (8) and, at its ends (12, 14) opposite an adjacent elementary lamination core, in each case a part-tooth (20), wherein two adjacent part-teeth (20) at the transition between two adjacent elementary lamination cores form a transition tooth (22), which is surrounded by a transition coil (24) which is pressed against the base of the grooves (10) on both sides of the transition tooth and holds the two part-teeth (20) pressed against each other, and that each transition coil (24) has around its conductor wire an outer thermoplastic bonding layer which forms a compact mass, so that each transition coil (24) is bonded with the transition tooth (22) bearing it and the said grooves (10) on both sides of the transition tooth (22).

6. The linear electric motor according to Claim 5, **characterised in that** the segmented part (2) and the coils (24) which are arranged in the grooves of the segmented part are coated with a stiffening resin.

7. The linear electric motor according to one of Claims 5 or 6, **characterised in that** the copper fill factor of the transition coils (24) in the grooves which surround the transition teeth is greater than 85%.

8. The linear electric motor according to one of Claims 5 to 7, the segmented part (2) of which is formed from only two types of elementary lamination cores (4, 6), wherein the first type (6) is formed from centre elements of equal length and the second type (4) is formed from an end tooth (34) with end elements which have a sloping profile.

## Revendications

1. Procédé pour fabriquer un moteur linéaire électrique avec une partie (2) segmentée présentant des dents (8) et des rainures (10), qui porte des bobines disposées dans ces rainures et entourant les dents, la partie segmentée étant formée de tôles assemblées en plusieurs paquets de tôle élémentaire (4, 6) présentant des dents (8) et des dents partielles (20) et le procédé comprenant les étapes suivantes :
- fabrication des paquets de tôle élémentaire (4, 6) pour la formation de la partie (2) segmentée, deux paquets voisins présentant respectivement plusieurs dents (8) et une dent partielle (20) sur leurs extrémités (12, 14) se trouvant respectivement au point de transition entre deux paquets ;
- agencement des paquets de tôle élémentaire, de sorte que deux paquets voisins forment sur leur point de transition une dent de transition (22) constituée de deux dents partielles (20) ;
- enfermement des dents (8) avec des bobines et enfermement de chaque dent de transition (22) avec une bobine de transition (24) ;
- arrivée de chaleur sur chaque bobine de transition, afin de rendre adhésive une couche thermoplastique extérieure entourant le fil conducteur de chaque bobine de transition (24), et exercice d'une pression sur chaque bobine de transition (24) en direction/vers le fond des deux rainures entourant chaque dent de transition (22), de sorte que les deux dents partielles (20) formant chacune la dent de transition (22) sont appuyées l'une contre l'autre ;
- consolidation de la couche thermoplastique formant la couche extérieure du fil conducteur.

2. Procédé selon la revendication 1, **caractérisé en ce que** les dents partielles présentent sur leurs surfaces transversales extérieures des moyens de positionnement (30, 32), qui sont disposés de telle sorte qu'ils garantissent un positionnement relatif des deux dents partielles (20) formant une dent de transition (22).

3. Procédé selon la revendication 1 ou 2, **caractérisé en ce que** la bobine de transition est formée d'un fil de cuivre émaillé et entouré par la couche thermoplastique extérieure.

4. Procédé selon l'une quelconque des revendications précédentes, **caractérisé en ce que** la partie (2) segmentée et les bobines (24) disposées dans les rainures sont recouvertes de résine après les étapes citées à la revendication 1.

5. Moteur linéaire électrique comprenant une partie (2) segmentée, qui présente des dents (8) et des rainures (10) et des bobines disposées dans ces rainures et entourant les dents, la partie segmentée étant formée de tôles assemblées en plusieurs paquets de tôle élémentaire (4, 6) présentant des dents (8) et des dents partielles (20), les dents (8) étant entourées de bobines, **caractérisé en ce que** chaque paquet de tôle élémentaire (4, 6) présente respectivement plusieurs dents (8) et une dent partielle (20) sur chacune de ses extrémités (12, 14) en face d'un paquet voisin de tôle élémentaire, deux dents partielles (20) voisines formant à la transition entre deux paquets voisins de tôle élémentaire une dent de transition (22) qui est entourée par une bobine de transition (24) pressée contre le fond des rainures (10) se trouvant des deux côtés de la dent de transition, laquelle bobine maintient les deux dents partielles (20) appuyées l'une contre l'autre, et **en ce que** chaque bobine de transition (24) présente autour de son fil conducteur une couche de cuisson extérieure thermoplastique, formant une masse compacte, de sorte que chaque bobine de transition (24) est cuite avec la dent de transition (22) qui la porte et lesdites rainures (10) se trouvant des deux côtés de la dent de transition (22).

6. Moteur linéaire électrique selon la revendication 5, **caractérisé en ce que** la partie (2) segmentée et les bobines (24) disposées dans les rainures de la partie segmentée sont recouvertes avec une résine de renfort.

7. Moteur linéaire électrique selon l'une quelconque des revendications 5 ou 6, **caractérisé en ce que** le facteur de remplissage de cuivre des bobines de transition (24) dans les rainures entourant les dents de transition est supérieur à 85 %.

8. Moteur linéaire électrique selon l'une quelconque des revendications 5 à 7, dont la partie (2) segmentée est formée seulement de deux types de paquets de tôle élémentaire (4, 6), le premier type (6) étant formé d'éléments centraux de même longueur et le second type (4) d'éléments d'extrémité présentant une dent d'extrémité (34) avec un profil chanfreiné.
